# EUROPÄISCHE PATENTSCHRIFT

(11) **EP 4 415 851 B1**
(45) Veröffentlichungstag und Bekanntmachung des Hinweises auf die Patenterteilung: **14.01.2026**
(21) Anmeldenummer: 22830395.4
(22) Anmeldetag: 14.10.2022
(51) Int. Cl.: B01D 45/08, B05B 14/43

(54) **FILTERMODUL**
FILTER MODULE
MODULE DE FILTRE

(30) Priorität: 14.10.2021 DE 102021211593
(43) Veröffentlichungstag der Anmeldung: 21.08.2024
(73) Patentinhaber: Kara, Jürgen, 96465 Neustadt/Coburg (DE)
(72) Erfinder: Kara, Jürgen, 96465 Neustadt/Coburg (DE)
(74) Vertreter: Isarpatent
(86) Internationale Anmeldenummer: PCT/EP2022/078677
(87) Internationale Veröffentlichungsnummer: WO 2023/062200

(56) Entgegenhaltungen:
- CN-A- 111 821 793
- GB-A- 2 140 707
- US-A- 4 321 064

## Beschreibung

### GEBIET DER ERFINDUNG

Die vorliegende Erfindung betrifft ein Filtermodul, zur Abscheidung von Partikeln aus verunreinigter Luft. Des Weiteren betrifft die Erfindung ein Verfahren zum Betreiben eines Filtermoduls sowie eine Verfahren zum Zusammenbau eines Filtermoduls.

### TECHNISCHER HINTERGRUND

Filtermodule werden für unterschiedliche Anwendungen eingesetzt. Beispielsweise können diese im Bereich von Sprühkabinen zur Aufnahme von Farbnebel eingesetzt werden. Die Filtermodule dienen dabei zur Reinigung der von der Sprühkabine abgeführten Luft. Die Farbpartikel, welche nicht an einem zu besprühenden Objekt anhaften, können durch die Filtermodule abgeschieden werden. Derartige Filtermodule können demnach ebenso als Abscheider bzw. Abscheidermodule bezeichnet werden.

Für gewöhnlich besitzen Filtermodule eine Eintrittsseite, die für den Eintritt eines zu reinigenden Luftstroms ausgebildet ist. Auf einer gegenüberliegenden Seite ist bevorzugt eine Austrittsseite angeordnet, die zum Austritt des gereinigten Luftstroms dient.

Beispielsweise können mehrere gleichartige Filtermodule nebeneinander bzw. aufeinander angeordnet werden, sodass eine zusammenhängende Fläche entsteht, die beispielsweise unterhalb oder auch seitlich neben dem zu besprühenden Objekt angeordnet werden kann. Dabei sind alle Eintrittsseiten auf einer Seite der zusammenhängenden Fläche angeordnet. Bevorzugt wird sozusagen hinter den Filtermodulen ein Unterdruck erzeugt, sodass ein Luftstrom durch die Filtermodule entsteht, der von der Eintrittsseite in Richtung der Austrittsseite strömt. Durch den Luftstrom wird die zu reinigende Luft durch die Filtermodule hindurchgeführt und gereinigt, indem die Partikel innerhalb der Filtermodule anhaften bzw. an den Filtermodulen abgeschieden werden.

Die Druckschrift EP 1 492 609 B1 zeigt ein Filtermodul in Form eines Hohlkörpers, das aus einem Papierstoff ausgebildet ist. Innerhalb des Filtermoduls sind zumindest zwei Wände angeordnet, die quer zur Richtung des eintretenden Luftstroms angeordnet sind. Die Wände weisen jeweils Öffnungen auf, wobei die Öffnungen der Wände von der Eintrittsseite in Richtung der Austrittsseite kleiner werden und/oder versetzt zueinander angeordnet sind. Durch die Wände entstehen Kammern innerhalb des Grundkörpers. Der zu reinigende Luftstrom wird mäanderförmig durch die unterschiedlich angeordneten Öffnungen in den hintereinander angeordneten Wänden geführt. Über einen Griff kann zumindest eine Kammer geöffnet werden, sodass in die Kammer beispielsweise ein Füllmaterial eingesetzt werden kann.

Weiterhin ist aus der EP 3 167 948 A1 ein Filtermodul bekannt, das ebenso aus einem Hohlkörper besteht, in welchen unterschiedliche Reinigungsstrukturen eingesetzt werden können. Die Reinigungsstruktur besteht wie bei der EP 1 492 609 B1 aus Wänden mit Öffnungen, wobei die Wände über eine quer dazu ausgerichtete Stabilisierungswand miteinander verbunden sind. Mehrere derartige Reinigungsstrukturen können hintereinander innerhalb des Hohlkörpers angeordnet werden und so das Filtermodul ausbilden. Durch die Öffnungen in den Wänden sowie in der Stabilisierungswand wird die zu reinigende Luft mäanderförmig abwechselnd durch die Wände und durch die Stabilisierungswände durch das Filtermodul geleitet. Die hintereinander angeordneten Reinigungsstrukturen können einzeln entnommen werden, sodass unterschiedlich verschmutzte Reinigungsstrukturen zu unterschiedlichen Zeiträumen ausgewechselt werden können. Die Reinigungsstrukturen können vor dem Zusammenbau zu dem Filtermodul zusammengefaltet vorliegen und müssen zum Einbau aufgefaltet werden.

Nachteilig ist bei derartigen Filtermodulen, dass durch die Umleitung des Luftstroms in unterschiedliche Raumrichtungen die Anhaftungen der Partikel innerhalb des Filtermoduls sehr unterschiedlich, d. h. sehr ungleich verteilt, ausfällt. Dies resultiert aus der mäanderförmigen Führung des Luftstroms, wodurch der Luftstrom nach Eintritt auf der Eintrittsseite um annähernd 90° in jede mögliche Raumrichtung umgeleitet wird. Durch diese schlagartige Umleitung des Luftstroms, beispielsweise nach links, rechts, oben oder unten innerhalb des Filtermoduls, erfolgt eine abrupte und sehr starke Abbremsung. In einer ersten Kammer zwischen einer ersten und einer zweiten Wand, die der zu reinigende Luftstrom als erstes erreicht, werden folglich die meisten Partikel abgeschieden. Weiter hinten angeordnete Kammern werden nur noch von wenigen Partikeln erreicht. Die Effizienz und Lebensdauer jedes Filtermoduls wird dadurch verringert, da diese bereits ausgetauscht werden müssen, wenn weiter hinten angeordnete Bereiche innerhalb des Filtermoduls erst sehr geringe Partikelansammlungen aufweisen.

In der EP 3 167 948 A1 wird dies dadurch gelöst, dass einzelne Reinigungsstrukturen, die hintereinander innerhalb des Grundkörpers angeordnet sind, einzeln entnommen werden können. Dadurch kann die Reinigungsstruktur, welche am nächsten an der Eintrittsseite angeordnet ist, ausgetauscht werden.

Die GB 2140 707 A offenbart einen Gasfilter mit einem länglichen, hohlen Element mit rechteckigem Querschnitt, das in seinen gegenüberliegenden Wänden Öffnungen aufweist, wodurch das zu filternde Gas durch das Element strömen kann. Das Element kann für Transport und Lagerung im Wesentlichen flach zusammengefaltet werden und kann bei Bedarf durch eine scharnierartige Bewegung seiner Ecken wieder in seine rechteckige Form zurückversetzt werden. Außerdem ist der Filter so beschaffen, dass der hindurchströmende Gasstrom im Betrieb innerhalb des Filters umgelenkt wird.

In der CN 111 821 793 A wird ein Verfahren zur Verbesserung der Filterleistung einer Trockenspritzkabine durch Verringerung der Agglomeration und Verstopfung von Pulver und Farbe bereitgestellt, wobei die Trockenspritzkabine zum Filtern von in der Spritzkabine erzeugten Farbpartikeln verwendet wird.

Während des Betriebs in einer Sprungkabine, wobei meist mehrere baugleiche Filtermodule nebeneinander bzw. aufeinander zu einer zusammenhängenden Fläche angeordnet sind, ist der Austausch einzelner Reinigungsstrukturen aus jedem einzelnen Filtermodul jedoch nur unter großem Zeitaufwand möglich. Insbesondere muss zum Austausch einer Reinigungsstruktur aus jedem einzelnen Filtermodul jeder einzelne Hohlkörper geöffnet werden. Dies ist bei nebeneinander sowie aufeinander angeordneten Filtermodulen nicht möglich. Demnach müsste die zusammenhängende Fläche aus Filtermodulen zunächst auseinandergebaut werden, sodass jedes einzelne Filtermodul zugänglich ist. Daraus resultiert ein enormer Zeitaufwand. In der Praxis ist der Austausch einzelner Reinigungselemente daher kaum möglich. Folglich werden erfahrungsgemäß die Filtermodule bereits dann komplett ausgetauscht, wenn lediglich das erste Reinigungselement derart verschmutzt ist, dass der Luftstrom dieses eine Reinigungselement nicht mehr durchströmen kann.

Nachteilig geht ebenso beim Zusammenbau der Filtermodule Zeit verloren, da die Wände oder die einzelnen Reinigungselemente einzeln in den Hohlkörper eingesetzt werden müssen. Weiterhin ist auch das Auffalten der Reinigungselemente zu einem dreidimensionalen Element zeitaufwendig und erfordert Fachkenntnisse, wobei das dreidimensionale Element durch die zuvor geknickten Wände instabil ist. Nachteilig muss das Reinigungselement daher versteift oder innerhalb des Hohlkörpers befestigt werden.

### ZUSAMMENFASSUNG DER ERFINDUNG

Vor diesem Hintergrund liegt der vorliegenden Erfindung die Aufgabe zugrunde, ein verbessertes Filtermodul anzugeben.

Erfindungsgemäß wird diese Aufgabe durch ein Filtermodul mit den Merkmalen des Patentanspruchs 1, durch ein Verfahren zum Betreiben eines Filtermoduls mit den Merkmalen des Patentanspruchs 16 und/oder mit einem Verfahren zum Zusammenbau eines Filtermoduls mit den Merkmalen des Patentanspruchs 17 gelöst.

### Demgemäß ist vorgesehen:

Ein Filtermodul zur Abscheidung von Partikeln aus verunreinigter Luft, insbesondere zur Abscheidung von Farbpartikeln aus einem Luftstrom, mit einem Aufnahmeelement, das eine Eintrittsseite, für den Eintritt eines zu reinigenden Luftstroms, und eine Austrittsseite, für den Austritt des gereinigten Luftstroms, aufweist, wobei die Eintrittsseite und die Austrittsseite gegenüberliegend am Aufnahmeelement angeordnet sind, einem dreidimensionalen Filtereinsatz, der in dem Aufnahmeelement aufgenommen ist, wobei der Filtereinsatz zumindest zwei Querwände aufweist, die annähernd parallel zueinander angeordnet sind, wobei jede Querwand zumindest zwei Öffnungen aufweist, und die Öffnungen benachbarter Querwände in der Höhe versetzt und in der Höhe überlappend angeordnet sind, sodass der Luftstrom von der Eintrittsseite in Richtung der Austrittsseite durch die Öffnungen in unterschiedliche Höhenlagen umlenkbar ist, wobei von der Eintrittsseite zur Austrittsseite eine wellenförmige Luftströmung ausbildbar ist, sodass Partikel aus dem zu reinigenden Luftstrom gleichmäßig verteilt in dem Filtereinsatz anhaften, wobei zwischen zwei Öffnungen einer Querwand eine Längswand angeordnet ist, welche die Querwände in einem Abstand fixiert und einen Luftstrom parallel zu den Querwänden unterbindet. Auf diese Weise können zwei gleichartige, sowie getrennt voneinander verlaufende Strömungen innerhalb des Filtermoduls ausgebildet werden. Die Fläche der Längswand kann ebenso zum Abscheiden von Partikeln dienen. Die Längswand kann mit den Querwänden durch eine Steckverbindung verbunden sein. Insbesondere weist die Längswand und/der die Querwände Schlitze auf, sodass die Längswand in die Querwände eingesteckt werden kann.

Ein Verfahren zum Betreiben eines Filtermoduls, insbesondere in einer Farbnebel-Absauganlage, wobei der Luftstrom von der Eintrittsseite in Richtung der Austrittsseite durch die Öffnungen der Querwände lediglich in unterschiedliche Höhenlagen innerhalb des Filtereinsatzes umgelenkt wird, sodass eine wellenförmige Strömung resultiert und eine Umlenkung der Strömung quer zu den unterschiedlichen Höhenlagen unterbunden wird.

Ein Verfahren zum Zusammenbau eines Filtermoduls, mit den Schritten: Aufstellen der Querwände, die mit der zumindest einen Längswand ineinandergesteckt vorliegen und den Filtereinsatz ausbilden, sodass aus einer annähernd zweidimensionalen Struktur eine dreidimensionale Struktur mit Hohlräumen entsteht, die in sich stabil ist; Einschieben des Filtereinsatzes in das Aufnahmeelement, insbesondere in eine geöffnete Oberseite des Aufnahmeelements; Verschließen des Aufnahmeelements durch einen Deckel, sodass der Filtereinsatz unverschiebbar in dem Aufnahmeelement fixierbar ist.

Die der vorliegenden Erfindung zugrundeliegende Erkenntnis besteht darin, dass durch eine gleichmäßige Verteilung der Partikel zwischen der Eintrittsseite und der Austrittsseite ein langlebiges sowie effektives Filtermodul ausgebildet werden kann.

Die der vorliegenden Erfindung zugrundeliegende Idee besteht darin, die Luftströmung nicht abrupt abzubremsen oder umzulenken, sondern stattdessen wellenförmig, insbesondere laminar, zwischen der Eintrittsseite und der Austrittsseite auszubilden, um eine ausgeglichene Anhaftungen der Partikel an allen Querwänden innerhalb des Aufnahmeelements zu ermöglichen.

Die wellenförmige Strömung ist bevorzugt zwischen der Eintrittsseite und der Austrittsseite als laminare Strömung ausgebildet. Dadurch können Verwirbelungen vermieden werden.

Vorteilhafterweise werden Partikel aus dem zu reinigenden Luftstrom an den und/oder zwischen den Querwänden abgeschieden. Dies erfolgt insbesondere durch eine aus der Luftströmung resultierende Zentrifugalkraft, wobei die Partikel schwerer als die Elemente der Luft sind und durch Trägheitskräfte durch die Schwerkraft, d. h. insbesondere nach unten, absinken. Dadurch kann bevorzugt eine gleichmäßige Verteilung der Partikel in dem Filtereinsatz erzielt werden.

Darüber hinaus besitzt ein derartiges Filtermodul einen einzigen Filtereinsatz, der über die komplette Lebensdauer des Filtermoduls nicht ausgetauscht werden muss, wobei alle Elemente des Filtereinsatzes bis zur Unbrauchbarkeit, d. h. bis zur Verstopfung durch abgeschiedene Partikel, verwendet werden können.

Ferner ist es auf diese Weise vorteilhaft möglich, einfach und zeitsparend einen dreidimensionalen Filtereinsatz aufzustellen, der in sich stabil ist. Dadurch muss der Filtereinsatz nicht innerhalb des Aufnahmeelements fixiert oder ausgesteift werden, wodurch weiterhin Zeit eingespart wird. Der Filtereinsatz ist durch die starren Querwände sowie die starren Längswände, die insbesondere während des Zusammenbaus niemals geklickt werden, in sich stabil.

Insgesamt kann daher eine Zwangsluftführung erzielt werden, die eine niedrige Anfangsdruckdifferenz von < 20 Pa aufweist. Die Zeit zum Aufbauen des Filtermoduls beträgt bevorzugt weniger als 30 sec und ist daher im Vergleich zu bekannten Filtermodulen sehr gering. Durch die wellenförmige, insbesondere laminare, Luftströmung kann Kuchenbildung an der Eintrittsseite nahezu vollständig vermieden werden. Insgesamt wird daher das Abscheideverhalten effizienter ausgestaltet.

Als Querwand ist ein Element zu verstehen, das quer zur Luftströmung innerhalb des Aufnahmeelements angeordnet ist. Durch die in der Höhe versetzt angeordneten Öffnungen und/oder sich in der Höhe überlappende Öffnungen ist ein Luftstrom ausbildbar, der durch die Öffnungen benachbarter Querwände von der Eintrittsöffnung in Richtung der Austrittsöffnung lediglich in unterschiedliche Höhenlagen innerhalb des Filtereinsatzes leicht ausgelenkt wird. Bevorzugt sind die benachbarten Öffnungen daher derart zueinander orientiert, dass eine stetige Ablenkung des Luftstroms erfolgen kann. Plötzliche Umlenkungen, insbesondere mäanderförmig, d. h. in einem Winkel von näherungsweise 90° zu der Strömungsrichtung, können dadurch vermieden werden. Eine optimale Lage und/oder Größe der Öffnungen kann beispielsweise durch künstliche Intelligenz ermittelt werden.

Als Öffnung ist eine Ausnehmung innerhalb der Querwand, insbesondere auch innerhalb der Längswand, zu verstehen. Die Öffnung kann dabei beliebige Formen aufweisen. Insbesondere ist die Öffnung rechteckig bzw. quadratisch ausgeformt. Bevorzugt weist die Öffnung keine spitzen Ecken, sondern abgerundete Ecken auf. Dadurch kann ein Abscheiden der Partikel aus dem zu reinigenden Luftstrom optimiert werden. Die verbleibende Wand zwischen den Öffnungen dient dabei zur Aufnahme der Partikel. Dabei sollte zwischen den Öffnungen genügend Wand verbleiben, um eine Aufnahmefläche für die Partikel auszubilden. So können Querwände mit unterschiedlich großen verbleibenden Wandabschnitten zwischen beispielsweise zwei Öffnungen, die in jeweils einer Querwand ausgebildet sind, ausgeformt werden. Werden diese unterschiedlich ausgebildeten Querwände hintereinander angeordnet, kann eine Luftströmung erzeugt werden, die durch die unterschiedlich großen verbleibenden Wandabschnitte in unterschiedliche Höhenlagen umgelenkt wird.

Vorteilhafte Ausgestaltungen und Weiterbildungen ergeben sich aus den weiteren Unteransprüchen sowie aus der Beschreibung unter Bezugnahme auf die Figuren der Zeichnung.

Gemäß einer vorteilhaften Ausführungsform kann der Filtereinsatz zumindest drei, insbesondere drei bis zehn, Querwände aufweist, wobei die Öffnungen benachbarter Querwände in der Höhe versetzt und /oder in der Höhe überlappend angeordnet sind. Vorteilhaft kann durch die versetzte Lage der Öffnungen die Strömung gezielt und insbesondere stetig umgelenkt werden. Ein abruptes Abbremsen der Strömungsgeschwindigkeit kann dadurch verhindert werden.

Bevorzugt sind die Querwände zumindest teilweise mit unterschiedlichen Abständen zueinander angerordnet. Die Querwände, die sich näher an der Eintrittsseite befinden sind bevorzugt mit einem größeren Abstand zueinander angeordnet als die Querwände, die sich näher an der Austrittsseite befinden. Dadurch kann sichergestellt werden, dass auch im Bereich der Eintrittsseite eine Verstopfung durch anhaftende Partikel vermieden wird, wenn bereits eine Vielzahl an Partikel an den dortigen Querwänden anhaftet.

Gemäß einer Ausführungsform kann die Längswand zumindest eine Öffnung aufweisen, die kleiner als die kleinste Öffnung der Querwände ist, wobei das Verhältnis einer Öffnung der Querwände zu der Öffnung der Längswand insbesondere 2:1,5 oder größer beträgt, sodass durch die Öffnung ein Druckausgleich innerhalb der Hohlräume, die zwischen den Querwänden und Längswänden ausgebildet werden, umsetzbar ist. Das Verhältnis bezieht sich insbesondere e auf die Querschnittsgröße der Öffnung. Auf diese Weise wird durch die Öffnung der zumindest einen Längswand die Strömung nicht umgeleitet. Die Öffnung in der Längswand dient vielmehr zum Druckausgleich innerhalb der Hohlräume, die zwischen den Querwänden und Längswänden innerhalb des Filtereinsatzes ausgebildet werden.

Gemäß einer vorteilhaften Ausführungsform können zumindest zwei, insbesondere drei bis fünf, Längswände umfasst sein, die annähernd parallel zueinander angeordnet sind, wobei jede Querwand in einem Bereich zwischen den Längswänden zumindest eine Öffnung aufweist. Vorteilhaft ist auf diese Weise ein Filtereinsatz ausbildbar, der eine stabile dreidimensionale Struktur aufweist.

Gemäß einer bevorzugten Ausführungsform können benachbarte Längswände jeweils zumindest eine Öffnung aufweisen, die kleiner als die kleinste Öffnung der Querwände ist, wobei das Verhältnis einer Öffnung der Querwände zu der Öffnung der Längswände insbesondere 2:1,5 oder größer beträgt, und die Öffnungen der Längswände identische Querschnitte aufweisen und/oder jeweils an gleicher Position bezüglich benachbarter Längswände angeordnet sind. Insbesondere sind alle Öffnungen der Längswände für sich kleiner ausgebildet als jede Öffnung der Querwände. Dadurch kann weiter effektiv eine Querströmung vermieden werden, da durch die auf gleicher Höhe angeordneten Öffnungen der Längswände lediglich ein Druckausgleich, jedoch keine Umlenkung des Luftstroms erreicht wird.

Gemäß einer besonders bevorzugten Ausführungsform können die Querwände nicht im Bereich der zumindest einen Öffnung der Längswände, insbesondere nicht im Bereich aller Öffnungen der Längswände, angeordnet sein. Dadurch wird sichergestellt, dass die Luftströmung gezielt durch die Öffnungen in den Querwänden geleitet wird.

Gemäß einer vorteilhaften Ausführungsform können die Querwände und die zumindest eine Längswand jeweils zumindest einen Schlitz aufweisen, sodass die Querwände mit der zumindest einen Längswand lösbar ineinander einsteckbar sind. Dadurch kann eine dreidimensionale Struktur ausgebildet werden, die einfach und schnell zusammengeklappt bzw. aufgefaltet werden kann. Verkleben, Blockverleimen oder Falten der einzelnen Komponenten ist nicht notwendig, wodurch der Herstellungsprozess sehr vereinfacht wird.

Gemäß einer Weiterbildung können die Querwände über eine komplette Länge zwischen der Eintrittsseite und der Austrittsseite und/oder die zumindest eine Längswand über eine komplette Breite des Aufnahmeelements verlaufen, sodass lediglich ein Filtereinsatz einen Innenraum des Aufnahmeelements überspannt. Durch die gleichmäßige Verteilung der Partikel an allen Querwänden bzw. allen Längswänden ist daher ein Austausch einzelner Elemente des Filtereinsatzes nicht notwendig, um einen kontinuierlichen Betrieb zu gewährleisten.

Gemäß einer Ausführungsform kann die Eintrittsseite des Aufnahmeelements zumindest eine Öffnung aufweisen, die der zumindest einen Öffnungen der der Eintrittsseite nächstliegenden Querwand entspricht, wobei insbesondere die zumindest eine Längswand die zumindest eine Öffnung an der Eintrittsseite nicht schneidet. Dadurch kann der Eintritt des zu reinigenden Luftstroms in das Aufnahmeelement optimiert werden. Vorteilhafterweise wird dadurch eine Umlenkung bzw. Abbremsung des Luftstroms durch die Längswand verhindert.

Bei einer vorteilhaften Ausführungsform können das Aufnahmeelement und/oder der Filtereinsatz ein rezyklierbaren Material enthalten und/oder das Filtermodul als Papierfiltermodul ausgebildet sein und/oder dass zumindest ein Sensor zum Messen der Geschwindigkeit des gereinigten Luftstroms und/oder zum Messen eines Widerstandswertes an der Austrittsseite angeordnet sein. Bevorzugt besteht der komplette Filtereinsatz aus Karton. Vorteilhafterweise ist ebenso das Aufnahmeelement komplett aus Karton ausgebildet. Ein derartiges Filtermodul kann auch mit anhaftenden Partikeln einfach entsorgt, insbesondere verbrannt werden. Zudem sind die Herstellungskosten minimal. Vorteilhafterweise kann dadurch festgestellt werden, wann ein Filtermodul ausgetauscht werden muss. Ist die Geschwindigkeit des gereinigten Luftstroms beispielsweise unterhalb einem Schwellenwert, kann davon ausgegangen werden, dass das Filtermodul derart verunreinigt ist, dass kaum mehr Luft hindurchströmen kann.

Gemäß einer Weiterbildung kann an der Austrittsseite innerhalb des Aufnahmeelements eine Kammer angeordnet sein, die zur Aufnahme eines Filtermaterials dient. Auf diese Weise ist eine Stufe zur Feinstfilterung ausbildbar, die kleinste Partikel aus dem Luftstrom herausfiltert.

Gemäß einer vorteilhaften Ausführungsform kann das Aufnahmeelement wiederverschließbar bzw. wieder öffenbar sein, wobei an einer Seitenfläche des Aufnahmeelements zumindest ein Verschlusselement ausgeformt ist. Bevorzugt kann das Verschlusselement komplett innerhalb der Seitenwand des Aufnahmeelements versenkt werden, sodass dieses ein Anordnen von mehreren Filtermodulen aufeinander bzw. nebeneinander, zur Ausbildung einer zusammenhängenden Fläche, nicht behindert.

Gemäß einer vorteilhaften Ausführungsform des Verfahrens zum Zusammenbau eines Filtermoduls kann vor dem Aufstellen durch vollflächiges Kontaktieren der zumindest einen Längswand mit den Querwänden ein im Wesentlichen zweidimensionale Struktur ohne Hohlräume vorliegen, die durch das Aufstellen zu einer dreidimensionalen Struktur mit rechteckige oder quadratische Hohlräumen umgeformt wird, ohne dass die Querwände oder die zumindest eine Längswand geknickt wird.

Vorteilhaft kann ebenso das Aufnahmeelement als im Wesentlichen zweidimensionale Struktur vorliegen, und vergleichbar zu einem Karton aufgebaut werden. Beide Elemente, d. h. das Aufnahmeelement sowie der Filtereinsatz, können dadurch platzsparend transportiert werden. Der Zusammenbau des Filtermoduls ist zudem zeitsparend und ohne Vorkenntnisse möglich.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnung angegebenen Ausführungsbeispiele näher erläutert. Es zeigen dabei:
- Fig. 1: eine schematische Darstellung hintereinander angeordnete Querwände eines Filtereinsatzes;
- Fig. 2: die Querwände mit Öffnungen aus Fig. 1, nebeneinander angeordnet;
- Fig. 3: nebeneinander angeordnete Querwände mit Öffnungen in einer weiteren Ausführungsform;
- Fig. 4: ein Filtermodul mit einem Aufnahmeelement und einem Filtereinsatz mit geöffnetem Deckel;
- Fig. 5: eine weitere Ausführungsform eines Filtermoduls;
- Fig. 6: eine weitere Ausführungsform eines Filtermoduls;
- Fig. 7: eine Draufsicht auf die Ausführungsform aus Fig. 5;
- Fig. 8: eine Draufsicht auf eine weitere Ausführungsform;
- Fig. 9: Querwände mit unterschiedlich angeordneten Öffnungen;
- Fig. 10: eine isometrische Darstellung eines Filtereinsatzes;
- Fig. 11: eine Seiteneiansicht des Filteransatzes aus Fig. 10 in einem zusammengelegten Zustand;
- Fig. 12: Öffnungen einer Längswand verglichen mit den Öffnungen einer Querwand;
- Fig. 13: eine Ausführungsform einer Querwand mit Schlitzen;
- Fig. 14: eine Ausführungsform einer Längswand mit Schlitzen;
- Fig. 15: eine weitere Ausführungsform einer Querwand;
- Fig. 16: eine Ausführungsform eines Filtermoduls in einer isometrischen Darstellung mit Detailansicht eines Verschlusselements.

Die beiliegenden Figuren der Zeichnung sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

### BESCHREIBUNG VON AUSFÜHRUNGSBEISPIELEN

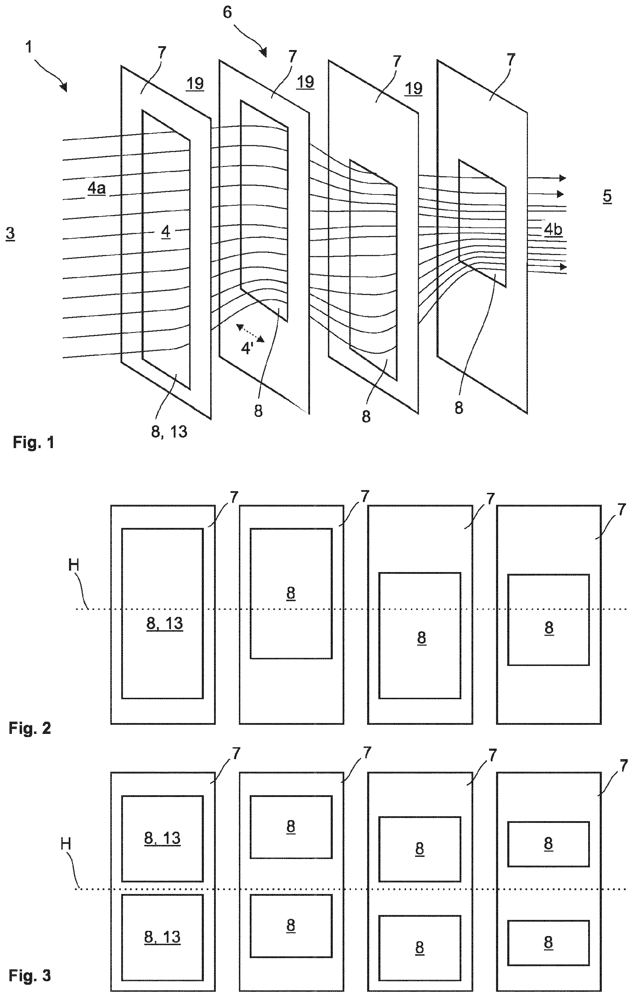

Fig. 1 zeigt eine schematische Darstellung hintereinander angeordnete Querwände 7 eines Filtereinsatzes 6. Die Querwände 7 weisen jeweils eine Öffnung 8 auf, wobei benachbarte Öffnungen 8 von benachbarten Querwänden 7 in der Höhe versetzt und/oder in der Höhe überlappend angeordnet sind. Dadurch wird ein Luftstrom 4, ausgehend von einer Eintrittsseite 3 in Richtung einer Austrittsseite 5 durch die Öffnungen 4 in unterschiedlichen Höhenlagen umgelenkt, wobei gleichzeitig eine wellenförmige, insbesondere laminare, Luftströmung entsteht, die keine Turbulenzen aufweist. Die Öffnung 8 der Querwand 7 auf der linken Seite kann ebenso eine Öffnung 13 der Eintrittsseite 3 eines Aufnahmeelements 2 darstellen, wobei der zu reinigende Luftstrom 4a zunächst durch die Öffnung 13 hindurchströmt. Auf der in der Darstellung rechten Seite tritt der gereinigte Luftstrom 4b aus. In den Bereichen zwischen allen Querwänden 7 wird eine stetige Luftströmung erzeugt, wobei durch die Anordnung der Öffnungen 8 eine Umlenkung der Luftströmung 4` parallel zu den Querwänden 7 unterbunden wird. Partikel aus der zu reinigenden Luft können daher gleichmäßig verteilt an allen Querwänden 7 anhaften. Dazu ist es vorteilhaft, wenn die Größe der Öffnungen 8 von der Eintrittsseite 3 in Richtung der Austrittsseite 5 nicht kontinuierlich abnimmt, um den Luftstrom 4 innerhalb des Filterelements nicht zu stark abzubremsen.

Fig. 2 zeigt die Querwände 7 mit Öffnungen 8 aus Fig. 1. Zum Vergleich sind diese nebeneinander angeordnet. Dabei ist ersichtlich, dass die Öffnungen 8 bezüglich einer horizontalen Achse H versetzt angeordnet sind. Die Öffnungen 8 unterschiedlicher Querwände 7 können dabei, wie beispielsweise die beiden mittleren Querwände 7, Öffnungen 8 mit identischen Abmessungen aufweisen, wobei diese jedoch versetzt zu der horizontalen Achse H angeordnet sind. Dadurch kann eine Umlenkung der Luft in unterschiedlichen Höhenlagen erfolgen.

Fig. 3 zeigt nebeneinander angeordnete Querwände 7 mit Öffnungen 8 in einer weiteren Ausführungsform. Im Unterschied zur Darstellung nach Fig. 2 weist jede Querwand 7 zwei Öffnungen 8 auf. Die zu reinigende Luft kann dadurch parallel durch beide Öffnungen 8 strömen, wobei bezüglich der oberen sowie der unteren Öffnung 8 eine Luftströmung 4 vergleichbar zu Fig. 1 erzeugt wird.

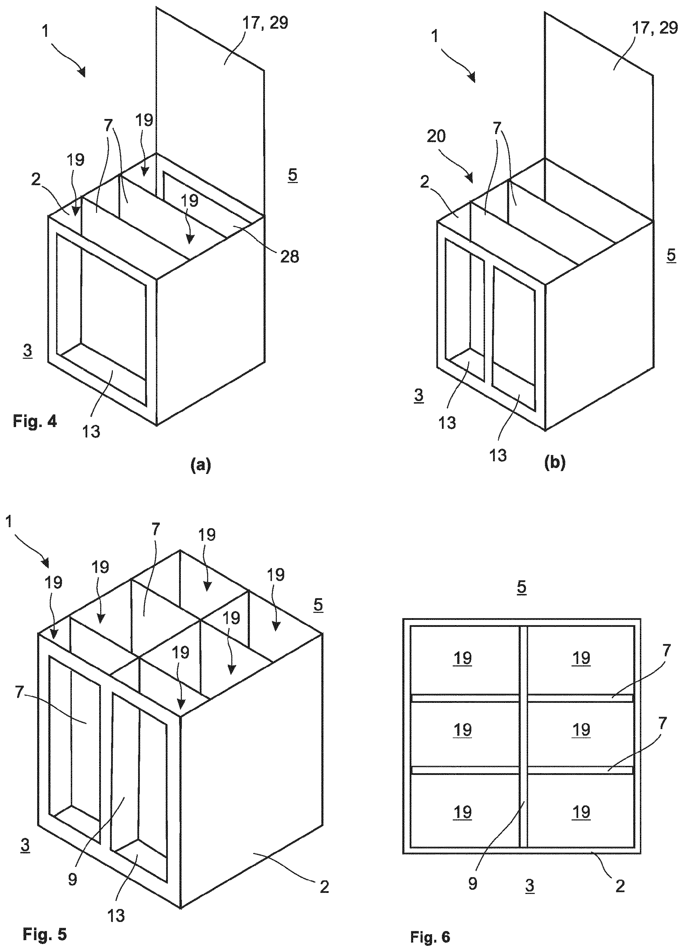

Fig. 4 (a) zeigt ein Filtermodul 1 mit einem Aufnahmeelement 2 und einem Filtereinsatz 6 mit geöffnetem Deckel 29. Die Öffnungen 8 in den Querwänden 7 sind aus Gründen der Übersichtlichkeit nicht dargestellt. In dieser Ausführungsform weist das Filtermodul 1 zwei Querwände 7 auf, die jeweils über die komplette Breite des Aufnahmeelements 2 verlaufen.

An der Eintrittsseite 3 ist eine Öffnung 13 angeordnet, die beispielsweise der Öffnung 8 (nicht dargestellt) der Querwand 7 entsprechen kann, die am nächsten an der Eintrittsseite 3 angeordnet ist. Gegenüberliegend zur Eintrittsseite 3 ist eine Austrittsseite 5 am Aufnahmeelement 2 angeordnet, die eine Öffnung 28 aufweist. Die Öffnung 28 ist bevorzugt nahezu über die komplette Seitenfläche des Aufnahmeelements 2 ausgebildet, um eine Abführung der gereinigten Luft 4b schnellstmöglich zu gewährleisten. An der Eintrittsseite 3 der Ausführungsform aus Fig. 4 (b) sind zwei Öffnungen 13 angeordnet. Die Querwand, die am nächsten an der Eintrittsseite 3 angeordnet ist, kann ebenso zwei nebeneinander angeordnete Öffnungen 8 (nicht dargestellt) aufweisen.

Fig. 5 zeigt eine weitere Ausführungsform eines Filtermoduls 1 mit einer Längswand 9. Durch die Längswand 9 werden die Querwände 7 in einem Abstand fixiert. Des Weiteren kann ein Luftstrom 4', dargestellt in Fig. 1, weiterhin unterbunden werden. Die Querwand 9 ist in einem Bereich mit dem Aufnahmeelement 2 kontaktiert, in welchen das Aufnahmeelement keine Öffnung aufweist. Dadurch kann der Luftstroms 4 optimal durch eine Seitenfläche 17 des Aufnahmeelements an der Eintrittsseite 3 zu dem Filtereinsatz 6 geleitet werden. Die Öffnung an der Austrittsseite 5 ist in dieser Darstellung nicht dargestellt.

Fig. 6 zeigt eine Draufsicht auf die Ausführungsform aus Fig. 5. Durch den Filtereinsatz 6 werden in dieser Ausführungsform insgesamt sechs Hohlräume 19 ausgebildet, wobei jeweils drei Hohlräume 19 hintereinander angeordnet sind. Dadurch können zwei Luftströmungen 4 erzeugt werden, die durch eine Längswand 9 in der Mitte des Aufnahmeelements 2 voneinander getrennt werden. Jede Querwand 7 kann dabei im Bereich jedes Hohlraums 19 Öffnungen 8 aufweisen, die beispielsweise gemäß Fig. 1 bis 3 ausgebildet sind.

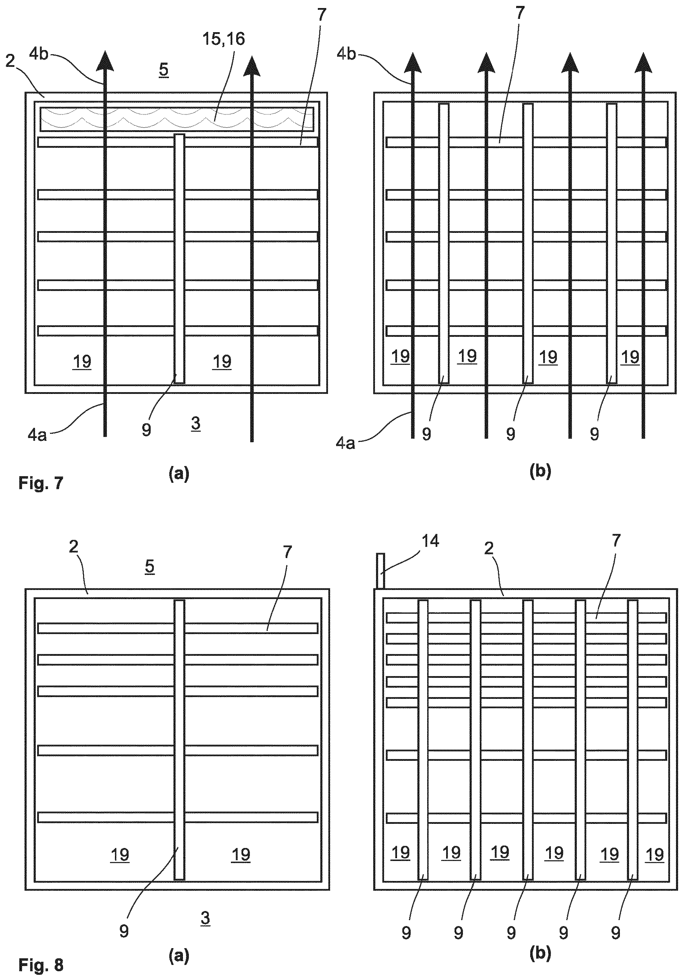

Fig. 7 zeigt zwei Draufsichten auf zwei weitere Ausführungsformen. Die Richtung der Luftströmung 4 ist durch die Pfeile dargestellt. In Fig. 7 (a) weist das Aufnahmeelement 2 an der Austrittsseite 5 eine Kammer 15 auf, in welcher ein Filtermaterial 16 angeordnet ist. Dadurch kann die zu reinigende Luft 4a in einem letzten Schritt feinstgereinigt werden. In Fig. 7 (b) weist der Filtereinsatz 6 drei Längswände 9 auf, sodass insgesamt vier Luftströmungen 4 von der Eintrittsseite 3 in Richtung der Austrittsseite 5 ausgebildet werden, die im Wesentlichen parallel zueinander verlaufen. Jede der Luftströmungen 4 ist dabei eine wellenförmige, insbesondere laminare, Strömung, wobei keine mäanderförmige Umleitung zu benachbarten Luftströmungen, d. h. parallel zu den Querwänden 7, und demnach in der Darstellung keine Ablenkung der Luftströmung nach links bzw. nach rechts, erfolgt.

Fig. 8 (a) und 8 (b) zeigen jeweils eine Draufsicht auf eine weitere Ausführungsform. In dieser Ausführungsform sind die Querwände 7 in unterschiedlichen Abständen zueinander angeordnet. Bevorzugt sind die Querwände 7 im Bereich der Eintrittsseite 3 mit einem größeren Abstand zueinander angeordnet, da in diesem Bereich die meisten Partikel aus der zu reinigenden Luft an dem Filtereinsatz 6 anhaften. Im Bereich der Austrittsseite 5 sind die Querwände 7 näher beieinander angeordnet. Dadurch kann eine Feinreinigung der Luftströmung erfolgen. Bei einer derartigen Anordnung kann besonders bevorzugt eine gleichmäßige Verteilung der Partikel über den kompletten Filtereinsatz 6 erreicht werden, sodass das Filtermodul 1 über einen besonders langen Zeitraum effektiv verwendet werden kann.

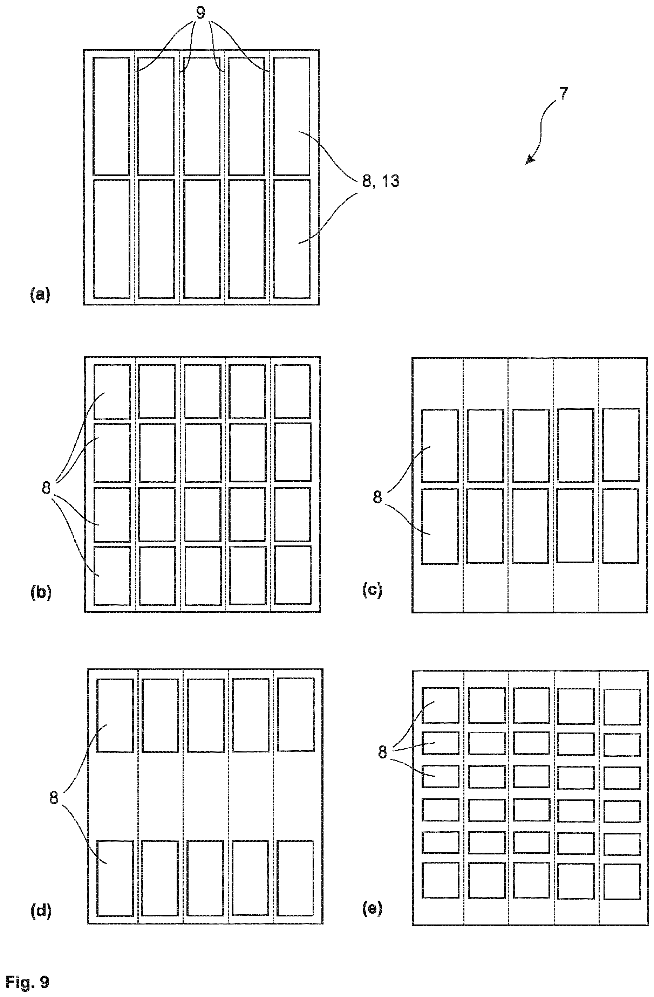

Fig. 9 zeigt Querwände 7 mit unterschiedlich angeordneten Öffnungen 8. Innerhalb eines Aufnahmeelements 2 werden Querwände 7 mit derartigen Öffnungen bevorzugt in der Reihenfolge beginnend mit der Ausführung nach Fig. 9 (a) bis Fig. 9 (e) hintereinander angeordnet. Die Querwand 7 gemäß Fig. 9 (a) kann dabei eine Eintrittsseite 3 des Aufnahmeelements 2 ausbilden, wobei die Öffnungen 8 ebenso die Öffnungen 13 an der Eintrittsseite darstellen können. Bevorzugt ist die Querwand 7 gemäß Fig. 9 (a) am nächsten an der Eintrittsseite 3 angeordnet. Demzufolge sind die Querwände 7 gemäß Fig. 9 (e) am nächsten an der Austrittsseite 5 angeordnet. Die Querwände 7 gemäß Fig. 9 (b) bis 9 (d) sind nacheinander dazwischen angeordnet, und können beispielsweise mit unterschieden Abständen zueinander, wie in Fig. 8 dargestellt, angeordnet sein. Bevorzugt weisen auch die Querwände 7 gemäß Fig. 7 derartige Öffnungen 8 auf.

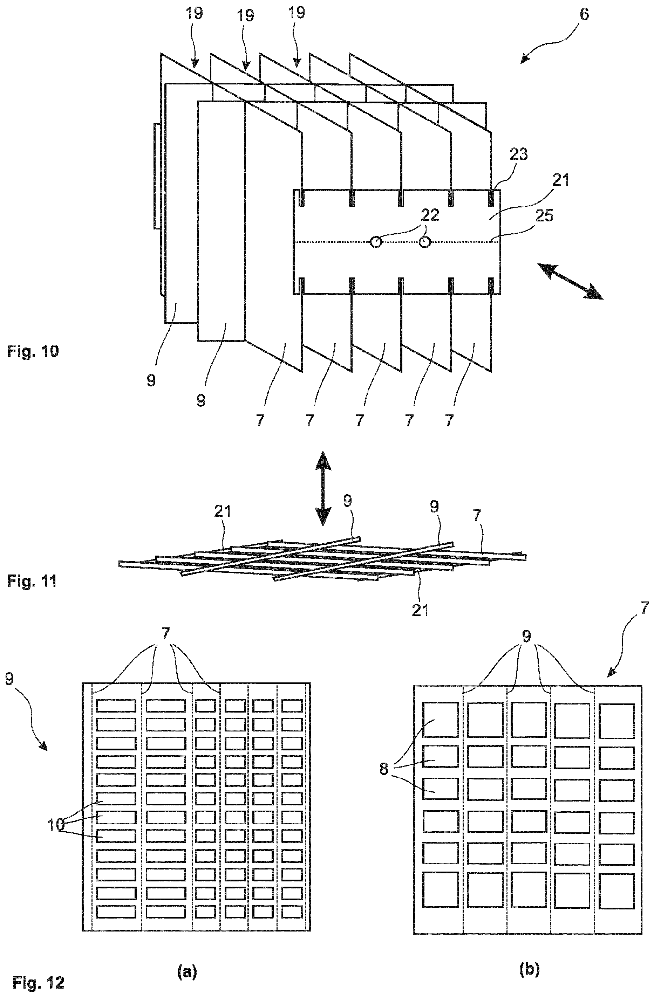

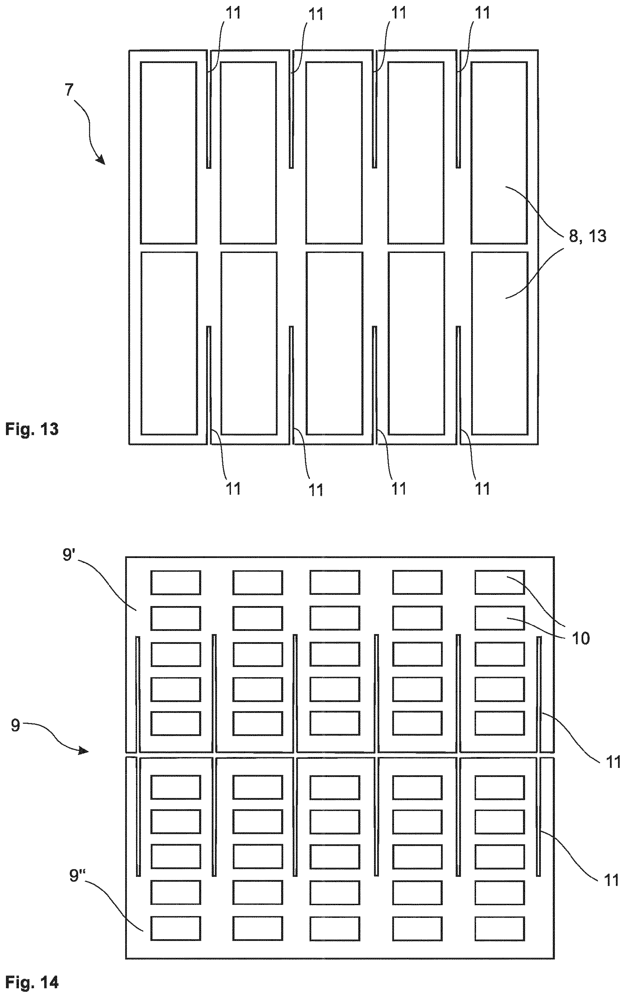

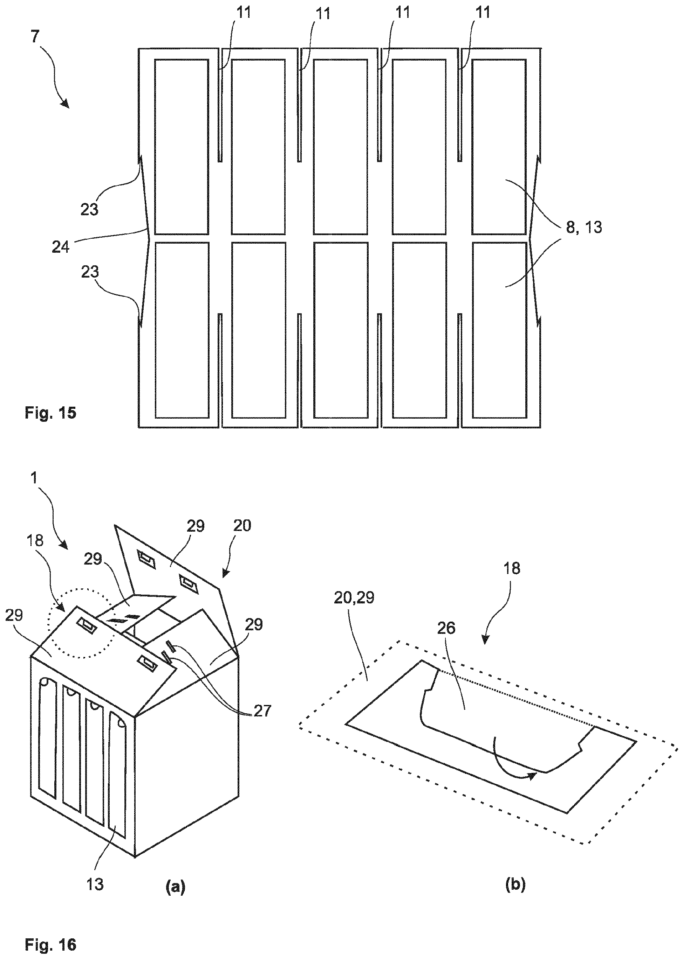

Fig. 10 zeigt eine isometrische Darstellung eines Filtereinsatzes 6. Zur Ausbildung einer dreidimensionalen Struktur sind die Querwände 7 und die Längswände 9 im Wesentlichen rechtwinklig zueinander angeordnet. Die Querwände 7 können in die Längswände 9 eingesteckt werden, oder andersherum, wobei beide Wände Schlitze 11 aufweisen. Diese sind beispielsweise in Fig. 13 oder Fig. 14 dargestellt. An einem seitlichen Ende der Querwände 7 können die Querwände 7 über ein Plattenelement 21 miteinander verbunden sein. Dafür kann jede Querwände 7 Aufnahmen 23 sowie Rücksprünge 24, dargestellt in Fig. 15, aufweisen. Durch das Plattenelement 21 kann die dreidimensionale Struktur weiter verstärkt werden. Das Plattenelement 21 kann beispielsweise Ausnehmungen 22 aufweisen, in welche eine Bedienperson mit den Fingern hineingreifen kann. Dadurch kann das Plattenelement 21 einfach entfernt werden. Vorteilhafterweise weist das Plattenelement 21 ebenso einen Falz 25 auf, der sich über die Länge des Plattenelements erstreckt. Greift nun eine Bedienperson in die Ausnehmungen 22 mit den Fingern hinein, faltet sich das Plattenelement 21 entlang des Falzes 25, sodass dieses leichter entnommen werden kann. Bevorzugt ist das Plattenelement dabei etwas länger als der Abstand zwischen den beiden Aufnahmen 23, siehe Fig. 15, ausgebildet, sodass diese sicher dazwischen verspannt werden kann. Das Plattenelement kann beispielsweise entlang des Rücksprungs 24 verlaufen und dort anliegen, der ebenso auf der Höhe des Falzes 25 einen Knick aufweist.

Fig. 11 zeigt eine Seiteneiansicht des Filteransatzes 6 aus Fig. 10 in einem zusammengelegten Zustand. Es ist erkennbar, dass die Querwände 7 gegenüber den Längswänden 9 verkippt werden, um aus einer zweidimensionalen Struktur gemäß Fig. 11 eine dreidimensionale Struktur gemäß Fig. 10 zu erhalten. Beim Aufstellen des Filtereinsatzes 6 zu einer dreidimensionalen Struktur mit rechteckigen oder quadratischen Hohlräumen 19 werden die Querwände 7 sowie die Längswände 9 daher nicht geknickt. Insgesamt weist der Filtereinsatz 6 daher eine hohe Stabilität auf. Des Weiteren kann ein einfacher Transport des zusammengeklappten Filtereinsatzes erfolgen.

Fig. 12 (a) zeigt Öffnungen 10 einer Längswand 9 verglichen mit den Öffnungen 8 einer Querwand 7. Jede Öffnung 10 der Längswand 9 ist dabei kleiner als jede Öffnung 8 der Querwand 7, die zum Vergleich in Fig. 12 (b) dargestellt ist. Die Darstellung entspricht der aus Fig. 9 (e). Da die Öffnungen 10 in den Längswänden 9 vergleichsweise klein sind, kann eine wellenförmige, insbesondere laminare Strömung 4 von der Eintrittsseite in Richtung der Austrittsseite sichergestellt werden, ohne dass ein mäanderförmiger Verlauf parallel zu den Querwänden 7 resultiert.

Fig. 13 zeigt eine Ausführungsform einer Querwand 7 mit Schlitzen 11. In dieser Ausführungsform ist zwischen zwei benachbarten Öffnungen 8 jeweils ein Schlitz 11 angeordnet in welchen eine Längswand 9 eingreifen kann. Die Querwand 7 weist in dieser Ausführungsform daher an einer Oberkante sowie an einer Unterkante Schlitze 11 auf, wobei jeweils zwei Schlitze 11 in einer Ebene bzw. auf einer Linie liegen. Die Schlitze 11 sind bevorzugt jeweils mit einer gleichen Länge ausgebildet. Insbesondere können die Schlitze 11 jeweils über 0,25 bis 0,75 der Höhe der Querwand 7 verlaufen. Vorteilhafterweise beträgt die gesamte Länge beider Schlitze 11, die auf einer Linie liegen, der Hälfte der Höhe der Querwand 7. Insbesondere bei hohen Strömungsgeschwindigkeiten sind die Querwände 7 durch Schlitze 11, die über die Hälfte der Höhe der Querwände 7 laufen, besonders stabil ausgebildet. Die in den Schlitzen 11 einzusteckenden Längswände 9 weisen daher bevorzugt zu den Schlitzen 11 korrespondierende Schlitze 11 auf. Diese sind beispielsweise in Fig. 14 dargestellt.

Fig. 14 zeigt eine Ausführungsform einer Längswand 9 mit Schlitzen 11. In dieser Ausführungsform ist die Längswand 9 zweiteilig ausgebildet, sodass der obere Teil 9' von oben auf die Querwand nach Fig. 13, und der untere Teil von Unten auf die Querwand nach Fig. 13 aufgesteckt werden kann. Die Schlitze 11 sind bevorzugt korrespondierend zu den Schlitzen 11 der Querwände 7 ausgebildet, sodass alle Schlitze 11 eine Steckverbindung zwischen den Querwänden 7 und den Längswänden 9 ermöglichen. Insbesondere verlaufen die Schlitze 11 der Längswände 9 jeweils über 0,25 der Höhe der Längswand, insbesondere über eine Länge von 0,2 bis 0,3 der Höhe der Längswand 9.

In einer weiteren nicht dargestellten Ausführungsform können die beiden Teilelemente der zweiteiligen Längswand 9, dargestellt in Fig. 14, miteinander verbunden sein. Dies kann insbesondere über Klemmleisten erfolgen, die jeweils eine Seitenkante eines oberen Teilelements mit einer Seitenkante eines unteren Teilelements miteinander verbinden. In Fig. 14 könnte demnach jeweils eine Klemmleiste an der linken sowie rechten Seitenkante angeordnet werden. Vorteilhafterweise kann durch die Klemmleiten die Luftströmung weiter beeinflusst werden.

Fig. 15 zeigt eine weitere Ausführungsform einer Querwand 7. Die Querwand weist Aufnahmen 23 sowie Rücksprünge 24 auf, die zur Aufnahme des Plattenelements 21, dargestellt in Fig. 10, ausgebildet sind. Werden beispielsweise Querwände gemäß Fig. 9 (a) bis 9 (e) eingesetzt, kann jede Querwand derartige Aufnahmen 23 und Rücksprünge 24 aufweisen.

Fig. 16 zeigt eine Ausführungsform eines Filtermoduls 6 in einer isometrischen Darstellung mit Detailansicht eines Verschlusselements 18. Die Verschlusselemente 18 sind an der Oberseite 20 des Aufnahmeelements 2 angeordnet. Die Oberseite 20 weist vier Elemente auf, die gemeinsam einen Deckel 29 ausbilden. An zwei der Elemente sind jeweils zwei Verschlusselemente 18 angeordnet. Zwei weitere Elemente des Deckels 29 weisen jeweils zwei Schlitze 27 auf. Die Schlitze 27 sind versetzt zueinander angeordnet. Folglich sind auch die Verschlusselemente 18 in gleicher Weise versetzt zueinander angeordnet.

In der Detailansicht in Fig. 16 (b) ist erkennbar, dass das Verschlusselement 18 aus einer Lasche 26 besteht, die in einen Schlitz 27 in einem weiteren Element des Deckels 29 eingreifen kann. Die Lasche 26 wird von oben in den Schlitz 27 eingeführt und in Pfeilrichtung umgebogen. Dadurch weist das Aufnahmeelement 2 eine ebene Oberseite 20 auf. Die Oberseite 20 ist vergleichbar zu einem Verpackungskarton ausgestaltet, aufweisende zwei innen liegende Laschen sowie zwei außenliegende Laschen, die gemeinsam einen Deckel 29 ausbilden.

In dieser Ausführungsform weist das Aufnahmeelement 2 an der Seitenfläche, die eine Eintrittsseite 3 ausbildet, vier im Wesentlichen rechteckige Öffnungen 13 auf. Vor Benutzung des Filtermoduls 1 können diese durch abnehmbare Elemente verschlossen sein, um ein Verschmutzen des Filtereinsatzes 6 zu verhindern. Über Eingriffslöcher bzw. Ausnehmungen können diese abnehmbaren Elemente leicht händisch entfernt werden. Dafür ist die Form der Öffnungen 13 bevorzugt durch eine Perforation vorgezeichnet. Ebenso kann an der Austrittsseite 5 die Öffnung 28 zunächst durch ein abnehmbares Element verschlossen sein.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar.

So können beispielsweise die Öffnungen 8, 10 und 13 unterschiedliche Ausgestaltungen aufweisen. Dabei kann die Form von der dargestellten rechteckigen bzw. quadratischen Form abweichen. Ebenso kann die Anordnung der Öffnungen von der dargestellten Weise abweichen.

### Bezugszeichenliste

- 1: Filtermodul
- 2: Aufnahmeelement
- 3: Eintrittsseite
- 4: Luftstrom
- 5: Austrittsseite
- 6: Filtereinsatz
- 7: Querwand
- 8: Öffnung der Querwand
- 9: Längswand
- 10: Öffnung der Längswand
- 11: Schlitz
- 12: Innenraum
- 13: Öffnung der Eintrittsseite
- 14: Sensor
- 15: Kammer
- 16: Filtermaterial
- 17: Seitenfläche
- 18: Verschlusselement
- 19: Hohlraum
- 20: Oberseite
- 21: Plattenelement
- 22: Ausnehmung
- 23: Aufnahme der Querwand
- 24: Rücksprung
- 25: Falz
- 26: Lasche
- 27: Schlitz
- 28: Öffnung der Austrittsseite
- 29: Deckel

- H: horizontale Achse

## Patentansprüche

1. Filtermodul (1), zur Abscheidung von Partikeln aus verunreinigter Luft, insbesondere zur Abscheidung von Farbpartikeln aus einem Luftstrom, mit
einem Aufnahmeelement (2), das eine Eintrittsseite (3), für den Eintritt eines zu reinigenden Luftstroms (4a), und eine Austrittsseite (5), für den Austritt des gereinigten Luftstroms (4b), aufweist, wobei die Eintrittsseite (3) und die Austrittsseite (5) gegenüberliegend an dem Aufnahmeelement (2) angeordnet sind,
einem dreidimensionalen Filtereinsatz (6), der in dem Aufnahmeelement (2) aufgenommen ist,
wobei der Filtereinsatz (6) zumindest zwei Querwände (7) aufweist, die annähernd parallel zueinander angeordnet sind, wobei jede Querwand (7) zumindest zwei Öffnungen (8) aufweist, und die Öffnungen (8) benachbarter Querwände (7) in der Höhe versetzt und in der Höhe überlappend angeordnet sind, sodass der Luftstrom (4) von der Eintrittsseite (3) in Richtung der Austrittsseite (5) durch die Öffnungen (4) in unterschiedliche Höhenlagen umlenkbar ist, wobei von der Eintrittsseite (3) zur Austrittsseite (5) eine wellenförmige Luftströmung ausbildbar ist, sodass Partikel aus dem zu reinigenden Luftstrom (4a) gleichmäßig verteilt in dem Filtereinsatz (6) anhaften,
wobei zwischen zwei Öffnungen (8) einer Querwand (7) eine Längswand (9) angeordnet ist, welche die Querwände (7) in einem Abstand fixiert und einen Luftstrom (4') parallel zu den Querwänden (7) unterbindet.

2. Filtermodul (1) nach Anspruch 1,
**dadurch gekennzeichnet,**
**dass** der Filtereinsatz (6) zumindest drei, insbesondere drei bis zehn, Querwände (7) aufweist, wobei die Öffnungen (8) benachbarter Querwände (7) in der Höhe versetzt und/oder in der Höhe überlappend angeordnet sind.

3. Filtermodul (1) nach Anspruch 1,
**dadurch gekennzeichnet,**
**dass** die Längswand (9) zumindest eine Öffnung (10) aufweist, die kleiner als die kleinste Öffnung (8) der Querwände (7) ist, wobei das Verhältnis einer Öffnung (8) der Querwände (7) zu der Öffnung (10) der Längswand (9) insbesondere 2:1,5 oder größer beträgt, sodass durch die Öffnung (10) ein Druckausgleich innerhalb der Hohlräume, die zwischen den Querwänden (7) und Längswänden (9) ausgebildet werden, umsetzbar ist.

4. Filtermodul (1) nach Anspruch 1, 2 oder 3,
**dadurch gekennzeichnet,**
**dass** zumindest zwei, insbesondere drei bis fünf, Längswände (9) umfasst sind, die annähernd parallel zueinander angeordnet sind, wobei jede Querwand (7) in einem Bereich zwischen den Längswänden (9) zumindest eine Öffnung (8) aufweist.

5. Filtermodul (1) nach Anspruch 4,
**dadurch gekennzeichnet,**
**dass** benachbarte Längswände (9) jeweils zumindest eine Öffnung (10) aufweisen, die kleiner als die kleinste Öffnung (8) der Querwände (9) ist, wobei das Verhältnis einer Öffnung (8) der Querwände (7) zu einer Öffnung (10) der Längswände (9) insbesondere 2:1,5 oder größer beträgt, und die Öffnungen (10) der Längswände (9) identische Querschnitte aufweisen und/oder jeweils an gleicher Position bezüglich benachbarter Längswände (9) angeordnet sind.

6. Filtermodul (1) nach Anspruch 5,
**dadurch gekennzeichnet,**
**dass** die Querwände (7) nicht in dem Bereich der zumindest einen Öffnung (10) der Längswände (9), insbesondere nicht im Bereich aller Öffnungen (10) der Längswände (9), angeordnet sind.

7. Filtermodul (1) nach einem der Ansprüche 1 bis 6,
**dadurch gekennzeichnet,**
**dass** die Querwände (7) und die zumindest eine Längswand (9) jeweils zumindest einen Schlitz (11) aufweisen, sodass die Querwände (7) mit der zumindest einen Längswand (9) lösbar ineinander einsteckbar sind.

8. Filtermodul (1) nach einem der vorstehenden Ansprüche,
**dadurch gekennzeichnet,**
**dass** die Querwände (7) über eine komplette Länge zwischen der Eintrittsseite (3) und der Austrittsseite (5) und/oder die zumindest eine Längswand (9) über eine komplette Breite des Aufnahmeelements (2) verlaufen, sodass lediglich ein Filtereinsatz (6) einen Innenraum (12) des Aufnahmeelements (2) überspannt.

9. Filtermodul (1) nach einem der vorstehenden Ansprüche,
**dadurch gekennzeichnet,**
**dass** die Eintrittsseite (3) des Aufnahmeelements (2) zumindest eine Öffnung (13) aufweist, die der zumindest einen Öffnung (8) der der Eintrittsseite (3) nächstliegenden Querwand (7) entspricht, wobei insbesondere die zumindest eine Längswand (9) die zumindest eine Öffnung (13) an der Eintrittsseite (3) nicht schneidet.

10. Filtermodul (1) nach einem der vorstehenden Ansprüche,
**dadurch gekennzeichnet,**
**dass** das Aufnahmeelement (2) und/oder der Filtereinsatz (6) ein rezyklierbaren Material enthalten und/oder das Filtermodul als Papierfiltermodul ausgebildet ist, und/oder dass zumindest ein Sensor (14) zum Messen der Geschwindigkeit des gereinigten Luftstroms (4b) und/oder zum Messen eines Widerstandswertes an der Austrittsseite (5) angeordnet ist.

11. Filtermodul (1) nach einem der vorstehenden Ansprüche,
**dadurch gekennzeichnet,**
**dass** an der Austrittsseite (5) innerhalb des Aufnahmeelements (2) eine Kammer (15) angeordnet ist, die zur Aufnahme eines Filtermaterials (16) dient.

12. Filtermodul (1) nach einem der vorstehenden Ansprüche,
**dadurch gekennzeichnet,**
**dass** das Aufnahmeelement (2) wiederverschließbar bzw. wieder öffenbar ist, wobei an einer Seitenfläche (17) des Aufnahmeelements (2) zumindest ein Verschlusselement (18) ausgeformt ist.

13. Verfahren zum Betreiben eines Filtermoduls (1) nach einem der vorstehenden Ansprüche, insbesondere in einer Farbnebel-Absauganlage,
wobei der Luftstrom (4) von der Eintrittsseite (3) in Richtung der Austrittsseite (5) durch die Öffnungen (7) der Querwände (8) lediglich in unterschiedliche Höhenlagen innerhalb des Filtereinsatzes (6) umgelenkt wird, sodass eine wellenförmige Strömung resultiert und eine Umlenkung der Strömung quer zu den unterschiedlichen Höhenlagen unterbunden wird.

14. Verfahren zum Zusammenbau eines Filtermoduls (1) nach einem der vorstehenden Ansprüche 1 bis 12, mit den Schritten:
Aufstellen der Querwände (7), die mit der zumindest einen Längswand (9) ineinandergesteckt vorliegen und den Filtereinsatz (6) ausbilden, sodass aus einer annähernd zweidimensionalen Struktur eine dreidimensionale Struktur mit Hohlräumen (19) entsteht, die in sich stabil ist,
Einschieben des Filtereinsatzes (6) in das Aufnahmeelement (2), insbesondere in eine geöffnete Oberseite (20) des Aufnahmeelements (2),
Verschließen des Aufnahmeelements (2) durch einen Deckel (29), sodass der Filtereinsatz (5) unverschiebbar in dem Aufnahmeelement (2) fixierbar ist.

15. Verfahren nach Anspruch 14,
**dadurch gekennzeichnet,**
**dass** vor dem Aufstellen durch vollflächiges Kontaktieren der zumindest einen Längswand (9) mit den Querwänden (7) ein im Wesentlichen zweidimensionale Struktur ohne Hohlräume (19) vorliegt, die durch das Aufstellen zu einer dreidimensionalen Struktur mit rechteckige oder quadratische Hohlräumen (19) umgeformt wird, ohne dass die Querwände (7) oder die zumindest eine Längswand (7) geknickt wird.

## Claims

1. Filter module (1) for separating particles from contaminated air, in particular for separating paint particles from an airflow, comprising
a receiving element (2) which has an inlet side (3) for admitting an airflow (4a) to be cleaned and an outlet side (5) for discharging the cleaned airflow (4b), the inlet side (3) and the outlet side (5) being arranged opposite one another on the receiving element (2), and
a three-dimensional filter insert (6) which is received in the receiving element (2),
wherein the filter insert (6) has at least two transverse walls (7) which are arranged approximately mutually parallel, each transverse wall (7) having at least two openings (8), and the openings (8) in adjacent transverse walls (7) being arranged offset in height and overlapping in height, in such a way that the airflow (4) from the inlet side (3) towards the outlet side (5) can be deflected into different vertical positions by the openings (4), it being possible to form a wave-like airflow from the inlet side (3) to the outlet side (5), in such a way that particles from the airflow (4a) to be cleaned adhere in an even distribution in the filter insert (6),
wherein a longitudinal wall (9) is arranged between two openings (8) in a transverse wall (7) and fixes the transverse walls (7) at a distance and prevents an airflow (4') parallel to the transverse walls (7).

2. Filter module (1) according to claim 1,
**characterised**
**in that** the filter element (6) has at least three, in particular three to ten, transverse walls (7), the openings (8) in adjacent transverse walls (7) being arranged offset in height and/or overlapping in height.

3. Filter module (1) according to claim 1,
**characterised**
**in that** the longitudinal wall (9) has at least one opening (10) which is smaller than the smallest opening (8) in the transverse walls (7), the ratio of an opening (8) in the transverse walls (7) to the opening (10) in the longitudinal wall (9) in particular being 2:1.5 or more, in such a way that pressure compensation, within the cavities formed between the transverse walls (7) and longitudinal walls (9), can be implemented via the opening (10).

4. Filter module (1) according to claim 1, claim 2 or claim 3,
**characterised**
**in that** at least two, in particular three to five, longitudinal walls (9) are included, which are arranged approximately mutually parallel, each transverse wall (7) having at least one opening (8) in a region between the longitudinal walls (9).

5. Filter module (1) according to claim 4,
**characterised**
**in that** adjacent longitudinal walls (9) each have at least one opening (10) which is smaller than the smallest opening (8) in the transverse walls (9), the ratio of an opening (8) in the transverse walls (7) to an opening (10) in the longitudinal walls (9) in particular being 2:1.5 or more, and the openings (10) in the longitudinal walls (9) having identical cross-sections and/or each being arranged in the same position with respect to adjacent longitudinal walls (9).

6. Filter module (1) according to claim 5,
**characterised**
**in that** the transverse walls (7) are not located in the region of the at least one opening (10) in the longitudinal walls (9), in particular not in the region of any openings (10) in the longitudinal walls (9).

7. Filter module (1) according to any of claims 1 to 6,
**characterised**
**in that** the transverse walls (7) and the at least one longitudinal wall (9) each have at least one slot (11), in such a way that the transverse walls (7) and the at least one longitudinal wall (9) can be releasably plugged together.

8. Filter module (1) according to any of the preceding claims,
**characterised**
**in that** the transverse walls (7) extend over an entire length between the inlet side (3) and the outlet side (5), and/or the at least one longitudinal wall (9) extends over an entire width of the receiving element (2), in such a way that just one filter insert (6) spans an interior space (12) of the receiving element (2).

9. Filter module (1) according to any of the preceding claims,
**characterised**
**in that** the inlet side (3) of the receiving element (2) has at least one opening (13) which corresponds to the at least one opening (8) in the transverse wall (7) closest to the inlet side (3), the at least one longitudinal wall (9) in particular not intersecting the at least one opening (13) on the inlet side (3).

10. Filter module (1) according to any of the preceding claims, **characterised**
**in that** the receiving element (2) and/or the filter insert (6) contain a recyclable material, and/or the filter module is configured as a paper filter module, and/or
**in that** at least one sensor (14) for measuring the velocity of the purified airflow (4b) and/or for measuring a resistance value is arranged on the outlet side (5).

11. Filter module (1) according to any of the preceding claims,
**characterised**
**in that** a chamber (15) for accommodating a filter material (16) is arranged on the outlet side (5) within the receiving element (2).

12. Filter module (1) according to any of the preceding claims,
**characterised**
**in that** the receiving element (2) is resealable or re-openable, at least one closure element (18) being formed on a side face (17) of the receiving element (2).

13. Method for operating a filter module (1) according to any of the preceding claims, in particular in a paint mist extraction
system,
wherein the airflow (4) from the inlet side (3) towards the outlet side (5) is deflected merely to different vertical positions within the filter insert (6) by the openings (7) in the transverse walls (8), in such a way that a wave-shaped flow arises and deflection of the flow transverse to the different vertical positions is prevented.

14. Method for assembling a filter module (1) according to any of preceding claims 1 to 12, comprising the steps of:
putting up the transverse walls (7), which are plugged together with the at least one longitudinal wall (9) and form the filter insert (6), in such a way that an approximately two-dimensional structure results in an intrinsically stable three-dimensional structure with cavities (19),
sliding the filter insert (6) into the receiving element (2), in particular into an open upper face (20) of the receiving element (2),
closing the receiving element (2) with a lid (29) in such a way that the filter insert (5) can be fixed undisplaceably in the receiving element (2).

15. Method according to claim 14,
**characterised**
**in that**, before they are put up, full-area contact of the at least one longitudinal wall (9) with the transverse walls (7) results in a substantially two-dimensional structure without cavities (19), which, by being put up, is transformed into a three-dimensional structure with rectangular or square cavities (19), without the transverse walls (7) or the at least one longitudinal wall (7) being folded.

## Revendications

1. Module filtrant (1) destiné à séparer des particules d'air contaminé, en particulier pour séparer des particules de peinture d'un flux d'air, comportant
un élément de réception (2) qui comporte un côté d'entrée (3) pour l'admission d'un flux d'air à épurer (4a) et un côté de sortie (5) pour l'évacuation du flux d'air épuré (4b), dans lequel le côté d'entrée (3) et le côté de sortie (5) sont agencés l'un en face de l'autre sur l'élément de réception (2),
un insert filtrant tridimensionnel (6) qui est reçu dans l'élément de réception (2),
dans lequel l'insert filtrant (6) comporte au moins deux parois transversales (7) qui sont agencées de façon sensiblement parallèle l'une par rapport à l'autre, dans lequel chaque paroi transversale (7) comporte au moins deux ouvertures (8), et les ouvertures (8) de parois transversales (7) adjacentes sont agencées de manière décalée en hauteur et de manière superposée en hauteur, de telle sorte que le flux d'air (4) provenant du côté d'entrée (3) en direction du côté de sortie (5) peut être dévié en différentes positions verticales par les ouvertures (4), dans lequel un écoulement d'air de forme ondulée peut être formé à partir du côté d'entrée (3) jusqu'au côté de sortie (5) de telle sorte que des particules du flux d'air à épurer (4a) adhèrent dans l'insert filtrant (6) de façon uniformément répartie,
dans lequel une paroi longitudinale (9) est agencée entre deux ouvertures (8) d'une paroi transversale (7) et fixe les parois transversales (7) à une certaine distance et empêche un flux d'air (4') parallèlement aux parois transversales (7).

2. Module filtrant (1) selon la revendication 1,
**caractérisé en ce**
**que** l'insert filtrant (6) comporte au moins trois, en particulier trois à dix, parois transversales (7), dans lequel les ouvertures (8) de parois transversales (7) adjacentes sont agencées de manière décalée en hauteur et/ou de manière superposée en hauteur.

3. Module filtrant (1) selon la revendication 1,
**caractérisé en ce**
**que** la paroi longitudinale (9) comporte au moins une ouverture (10) qui est plus petite que la plus petite ouverture (8) des parois transversales (7), dans lequel le rapport d'une ouverture (8) des parois transversales (7) sur l'ouverture (10) de la paroi longitudinale (9) est en particulier de 2:1,5 ou plus, de telle sorte qu'une égalisation de pression peut être réalisée à travers l'ouverture (10) à l'intérieur des cavités qui sont formées entre les parois transversales (7) et les parois longitudinales (9).

4. Module filtrant (1) selon la revendication 1, 2 ou 3,
**caractérisé en ce**
**qu'**au moins deux, en particulier trois à cinq, parois longitudinales (9) sont incluses, lesquelles sont agencées approximativement parallèle les unes aux autres, dans lequel chaque paroi transversale (7) comporte au moins une ouverture (8) dans une zone située entre les parois longitudinales (9).

5. Module filtrant (1) selon la revendication 4,
**caractérisé en ce**
**que** des parois longitudinales (9) adjacentes comportent chacune au moins une ouverture (10) qui est plus petite que la plus petite ouverture (8) des parois transversales (9), dans lequel le rapport d'une ouverture (8) des parois transversales (7) sur une ouverture (10) des parois longitudinales (9) est en particulier de 2:1,5 ou plus, et les ouvertures (10) des parois longitudinales (9) ont des sections transversales identiques et/ou sont chacune agencées à la même position par rapport à des parois longitudinales (9) adjacentes.

6. Module filtrant (1) selon la revendication 5,
**caractérisé en ce**
**que** les parois transversales (7) ne sont pas agencées dans la zone de ladite au moins une ouverture (10) des parois longitudinales (9), en particulier pas dans la zone de toutes les ouvertures (10) des parois longitudinales (9).

7. Module filtrant (1) selon l'une des revendications 1 à 6,
**caractérisé en ce**
**que** les parois transversales (7) et ladite au moins une paroi longitudinale (9) comportent chacune au moins une fente (11), de telle sorte que les parois transversales (7) peuvent être insérées de manière amovible dans ladite au moins une paroi longitudinale (9).

8. Module filtrant (1) selon l'une des revendications précédentes,
**caractérisé en ce**
**que** les parois transversales (7) s'étendent sur une longueur complète entre le côté d'entrée (3) et le côté de sortie (5) et/ou ladite au moins une paroi longitudinale (9) s'étend sur une largeur complète de l'élément de réception (2), de telle sorte que seul un insert filtrant (6) couvre un espace intérieur (12) de l'élément de réception (2).

9. Module filtrant (1) selon l'une des revendications précédentes,
**caractérisé en ce**
**que** le côté d'entrée (3) de l'élément de réception (2) comporte au moins une ouverture (13) qui correspond à ladite au moins une ouverture (8) de la paroi transversale (7) la plus proche du côté d'entrée (3), dans lequel en particulier ladite au moins une paroi longitudinale (9) ne coupe pas ladite au moins une ouverture (13) du côté d'entrée (3).

10. Module filtrant (1) selon l'une des revendications précédentes,
**caractérisé en ce**
**que** l'élément de réception (2) et/ou l'insert filtrant (6) contiennent un matériau recyclable et/ou le module filtrant est réalisé sous la forme d'un module filtrant en papier et/ou qu'au moins un capteur (14) destiné à mesurer la vitesse du flux d'air épuré (4b) et/ou à mesurer une valeur de résistance est agencé du côté de sortie (5).

11. Module filtrant (1) selon l'une des revendications précédentes,
**caractérisé en ce**
**qu'**une chambre (15) servant à recevoir un matériau filtrant (16) est agencée du côté de sortie (5) à l'intérieur de l'élément de réception (2).

12. Module filtrant (1) selon l'une des revendications précédentes,
**caractérisé en ce**
**que** l'élément de réception (2) peut être refermé ou réouvert, dans lequel au moins un élément de fermeture (18) est formé sur une surface latérale (17) de l'élément de réception (2).

13. Procédé pour faire fonctionner un module filtrant (1) selon l'une des revendications précédentes, en particulier dans une installation d'extraction de brume de peinture,
dans lequel le flux d'air (4) provenant du côté d'entrée (3) en direction du côté de sortie (5) est uniquement dévié à différentes positions verticales à l'intérieur de l'insert filtrant (6) par les ouvertures (7) des parois transversales (8), de telle sorte qu'il en résulte un écoulement de forme ondulée et une déviation de l'écoulement transversalement aux différentes positions verticales est évitée.

14. Procédé pour assembler un module filtrant (1) selon l'une des revendications 1 à 12 précédentes, comportant les étapes consistant à :
monter les parois transversales (7) qui sont insérées les unes dans les autres dans ladite au moins une paroi longitudinale (9) et qui forment l'insert filtrant (6), de telle sorte qu'une structure approximativement bidimensionnelle est transformée en une structure tridimensionnelle comportant des cavités (19) et qui est auto-stable,
faire glisser l'insert filtrant (6) dans l'élément de réception (2), en particulier dans un côté supérieur ouvert (20) de l'élément de réception (2),
fermer l'élément de réception (2) au moyen d'un couvercle (29) de telle sorte que l'insert filtrant (5) peut être fixé de façon non mobile dans l'élément de réception (2).

15. Procédé selon la revendication 14,
**caractérisé en ce**
**que**, avant le montage, par un contact de surface complet de ladite au moins une paroi longitudinale (9) avec les parois transversales (7), une structure sensiblement bidimensionnelle sans cavités (19) est obtenue, laquelle, par le montage, est transformée en une structure tridimensionnelle avec des cavités rectangulaires ou carrées (19), sans plier les parois transversales (7) ou ladite au moins une paroi longitudinale (7) .
